# EUROPEAN PATENT APPLICATION

(11) **EP 2 112 128 A1**
(43) Date of publication of application: **28.10.2009**
(21) Application number: 09290270.9
(22) Date of filing: 10.04.2009
(51) Int. Cl.: C04B 35/565, C04B 35/488, C04B 35/628, C04B 35/80

(54) **Silicon carbide fiber dispersion-reinforced composite refractory molding**

(30) Priority: 16.04.2008 JP 2008106590
(71) Applicant: Ariake Ceramic Constructions Co. Ltd., Atsugi-shi, Kanagawa (JP)
(72) Inventor: Fukumaru, Shigeru, Atsugi-shi, Kanagawa (JP); Ichikawa, Hiroshi, Atsugi-shi, Kanagawa (JP)
(74) Representative: Novagraaf IP

(57) **Abstract**

The present invention provide a silicon carbide fiber dispersion-reinforced composite refractory molding comprising an aggregate part and a bonding part which are obtained by compounding a plastic refractory composition containing at least SiC, with SiC fiber chops, in an amount of 0.1 to 3% by weight based on the plastic refractory composition, wherein fiber bundles each consisting of a plurality of SiC inorganic fibers containing 50% or more SiC in their main component and having a length of 10 mm to 100 mm and a fiber diameter of 5 µm to 25 µm were bundled via an organic binder, kneading the resulting mixture with water and then drying and solidifying it, wherein the aggregate part contains at least SiC, the bonding part is constructed by hydration reaction, and monofilaments consisting of SiC inorganic fibers containing 50% or more SiC in their main component, having a fiber diameter of 5 µm to 25 µm, a fiber length of 50 µm to 2,000 µm and an aspect ratio of 5 to 200 are dispersed in the bonding part.

## Description

### BACKGROUND OF THE INVENTION

### 1. Field of the Invention

The present invention relates to a fiber-reinforced composite refractory molding having improved elastic-plastic fracture toughness, breaking energy and thermal shock resistance.

### 2. Description of the Related Art

A high-strength castable that is one kind of plastic refractory is used in a melting furnaces for melting a metal such as aluminum etc., crucibles, baths, gutters, pipes, and the like. In a bonding part of this high-strength castable, not only alumina cement but also 1 micron or less superfine powders of microsilica etc. are used to constitute a matrix with a high degree of packing (with fewer voids).

This plastic refractory, similar to building cement, is kneaded with water and poured and charged into a frame thereby easily forming a molding, and used in various heat-treating furnaces. However, aluminum melting furnaces made of the castable are poor in resistance to thermal strain and are liable to cracking and breakage upon rapid heating and cooling.

It is known that fiber-reinforced ceramics composite materials have fracture toughness and damage tolerance (bending strength-strain curve) improved by reinforcing ceramics with inorganic fibers. High-performance materials containing 30 vol% or more fibers are mainly used in CFCC (Continuous Fiber Ceramics Composites) used in hot gas turbines and parts for aircraft engines or in CMC (Ceramic Matrix Composites).

The present applicant has already proposed a fiber-reinforced composite heat-resistant molding using long SiC fibers having a diameter of 5 µm to 25 µm, a length of 0.5 mm to 25 mm and an aspect ratio of 200 to 1000 (Japanese Patent Application Laid-Open No. 2001-80970).

### SUMMARY OF THE INVENTION

Generally, a metal-melting furnace and high temperature-resistant members used in its attached equipments are gradually pre-heated from ordinary temperature to the operating temperature of the members for several hours or even for several-tens hours so as not to give rapid thermal strain causing breakage to the members. There is demand for fundamental improvements in such process, from the viewpoint of energy saving, reduction of field operation at high temperatures, and the lifetime of refractory members exposed to high temperatures.

The refractory, whether amorphous or not, is generally an elastic body, is significantly low in mechanical strength as compared with metal, and is liable to cracking, so there is demand for a material having high elastic-plastic fracture toughness at high temperatures.

Conventional materials when used in an aluminum-melting furnace or in its various related members are easily cracked and broken, and are thus applicable to only thick-wall, simply shaped members. Accordingly, advanced structural designs such as aluminum melting, transfer, hot water supply, cast system automation, productivity improvement, energy saving, and manufacturing of high-quality products cannot be coped with.

Hence, the object of the present invention is to propose a fiber-reinforced composite refractory molding, which is reinforced with fibers, has significantly improved elastic-plastic fracture toughness upon forming and drying, and is excellent in thermal shock resistance.

The present invention proposes a silicon carbide fiber dispersion-reinforced composite refractory molding comprising:
an aggregate part and a bonding part which are obtained by:
   compounding an plastic refractory composition containing at least SiC, with SiC fiber chops, in an amount of 0.1 to 3% by weight based on the plastic refractory composition, wherein fiber bundles each consisting of a plurality of SiC inorganic fibers containing 50% or more SiC in their main component and having a length of 10 mm to 100 mm and a fiber diameter of 5 µm to 25 µm were bundled via an organic binder,
   kneading the resulting mixture with water and then drying and solidifying it, wherein:
      the aggregate part contains at least SiC,
      the bonding part is constructed by hydration reaction, and
      monofilaments consisting of SiC inorganic fibers containing 50% or more SiC in their main component, having a fiber diameter of 5 µm to 25 µm, a fiver length of 50 µm to 2,000 µm and an aspect ratio of 5 to 200 are dispersed in the bonding part.

According to the present invention, there can be provided a fiber-reinforced composite refractory molding, which is reinforced with fibers, has significantly improved elastic-plastic fracture toughness upon forming and drying, and is excellent in thermal shock resistance.

### BRIEF DESCRIPTION OF THE DRAWINGS

FIG. 1 is a micrograph of a SiC fiber-dispersed plastic refractory composition.
FIG. 2 shows a fiber-length distribution of SiC fibers in a SiC fiber-dispersed plastic refractory composition.
FIG. 3 shows bending load-variation curves of the silicon carbide fiber dispersion-reinforced composite refractory molding of the present invention and a conventional refractory molding with no fibers added.
FIG. 4 is a graph showing the thermal shock damage resistance parameter of silicon carbide fiber dispersion-reinforced composite refractory molding of the present invention.

### DETAILED DESCRIPTION OF THE INVENTION

The silicon carbide fiber dispersion-reinforced composite refractory molding of the present invention comprises an aggregate part and a bonding part which are obtained by:
compounding an plastic refractory composition containing at least SiC, with SiC fiber chops, in an amount of 0.1 to 3% by weight based on the plastic refractory composition, wherein fiber bundles each consisting of a plurality of SiC inorganic fibers containing 50% or more SiC in their-main component and having a length of 10 mm to 100 mm and a fiber diameter of 5 µm to 25 µm were bundled via an organic binder (for example, an epoxy resin),
kneading the resulting mixture with water and then drying and solidifying it, wherein:
   the aggregate part contains at least SiC,
   the bonding part is constructed by hydration reaction, and
   monofilaments consisting of SiC inorganic fibers containing 50% or more SiC in their main component, having a fiber diameter of 5 µm to 25 µm, a fiver length of 50 µm to 2,000 µm and an aspect ratio of 5 to 200 are dispersed in the bonding part.

In the silicon carbide fiber dispersion-reinforced composite refractory molding of the present invention, monofilaments consisting of SiC inorganic fibers containing 50% or more SiC in their main component, having a fiber diameter of 5 µm to 25 µm, a fiver length of 50 µm to 2,000 µm and an aspect ratio of 5 to 200 are dispersed in the bonding part (matrix) constructed by hydration reaction.

The material thus reinforced by dispersing monofilaments consisting of SiC inorganic fibers has significantly improved elastic-plastic fracture toughness, and serves as a fiber-reinforced composite plastic refractory molding excellent in thermal shock resistance.

Accordingly, the silicon carbide fiber dispersion-reinforced composite refractory molding of the present invention can, without requiring preheating, be dipped directly in a high-temperature molten metal.

In the foregoing description, the plastic refractory composition containing at least SiC can be-compounded- not only with SiC but also with an plastic refractory known in the art. For example, the plastic refractory composition can be compounded with SiO₂, Al₂O₃, Fe₂O₃, mullite, microsilica, alumina cement or the like besides SiC.

Herein, the plastic refractory composition is defmed to contain at least SiC, because the silicon carbide fiber dispersion-reinforced composite refractory molding as the final product contains at least SiC in the aggregate part, thereby exhibiting the high thermal conductivity and excellent heat resistance of SiC. It is also considered that when the plastic refractory composition is mixed with SiC fiber chops and then kneaded with water, the SiC inorganic fibers are broken by SiC particles in the plastic refractory composition, thereby reducing the fiber length, to form separated individual monofilaments to be dispersed in the bonding part (matrix).

The proportion of SiC contained in the plastic refractory composition is preferably established such that the amount of SiC is not lower than 15% by weight based on the whole of the aggregate part in the silicon carbide fiber dispersion-reinforced composite refractory molding of the present invention as the final product. This is because the fibers can be preferably broken to a required length when the plastic refractory composition is mixed with SiC fiber chops and kneaded with water.

The SiC fiber chops wherein fiber bundles each consisting of a plurality of SiC inorganic fibers containing 50% or more SiC in their main component and having a length of 10 mm to 100 mm and a fiber diameter of 5 µm to 25 µm were bundled via an organic binder (that is, those chops constructed by bundling, via an organic binder, fiber bundles consisting of a plurality of SiC inorganic fibers (containing 50% or more SiC in their main component and having a length of 10 mm to 100 mm and a fiber diameter of 5 µm to 25 µm) are mixed with the plastic refractory composition containing at least SiC and then kneaded with water (for example, by means of a kneader), whereby an SiC fiber-dispersed plastic refractory composition wherein the fibers were broken to attain an aspect ratio (length/diameter) in the range of 5 to 200 and their monofilaments were dispersed individually at random can be obtained.

This product is then dried and solidified (for example dried and molded at a temperature of 1200°C or less) to produce a fiber-reinforced composite refractory molding consisting of an aggregate part containing at least SiC and a bonding part constituted by hydration reaction, wherein monofilaments consisting of SiC inorganic fibers containing 50% or more SiC in their main component and having a fiber diameter of 5 µm to 25 µm, a fiber length of 50 µm to 2,000 µm and an aspect ratio of 5 to 200 are dispersed in the bonding part, thereby reinforcing the bonding part therewith.

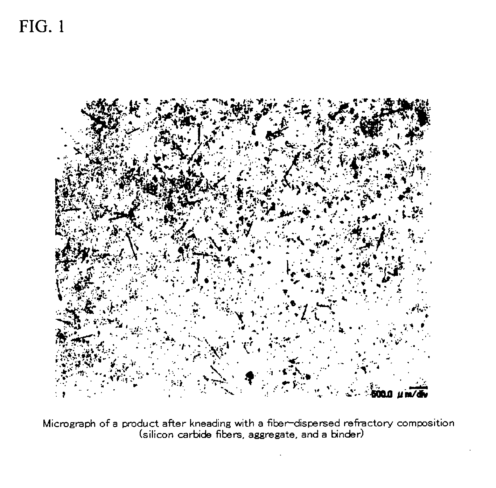

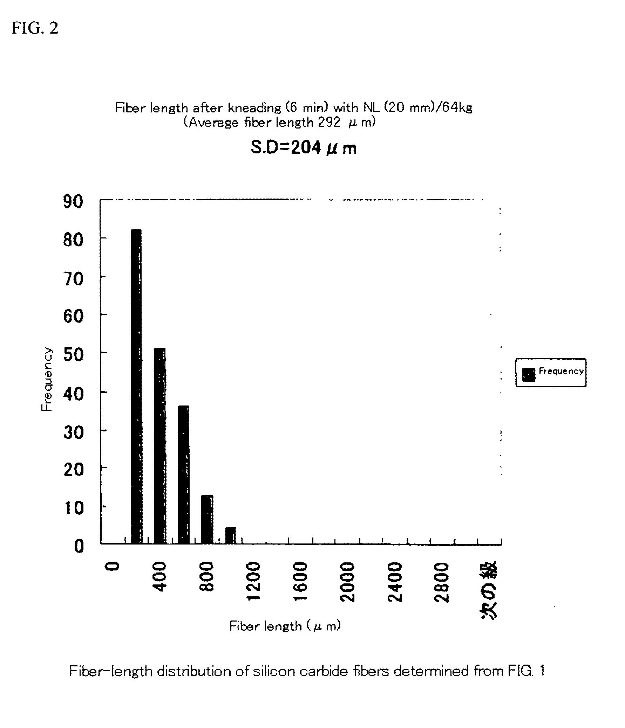

The present inventors compounded the plastic refractory composition containing at least SiC, with the SiC fiber chops wherein fiber bundles each consisting of a plurality of SiC inorganic fibers containing 50% or more SiC in their main component and having a length of 10 mm to 100 mm and a fiber diameter of 5 µm to 25 µm were bundled via an organic binder, and then kneaded the resulting mixture with water thereby giving the SiC fiber-dispersed plastic refractory composition in a non-solidified (hydrated) state just after kneading, then mixed this product with an excess of water and filtered it, and they observed the resulting product under a microscope. The results are shown in FIGS. 1 and 2.

That is, the SiC fiber chops wherein fiber bundles each consisting of a plurality of SiC inorganic fibers containing 50% or more SiC in their main component and having a length of 10 mm to 100 mm and a fiber diameter of 5 µm to 25 µm were bundled via an organic binder are separated into individual monofilaments consisting of SiC inorganic fibers, and their fiber length was 290 µm on average (50 µm to 2000 µm).

It could be confirmed that the monofilaments consisting of SiC inorganic fibers are dispersed separately and individually at random in the bonding part, by observing, under a microscope, a fracture cross-section of the fiber-reinforced composite refractory molding of the present invention obtained by compounding the plastic refractory composition containing at least SiC, with the SiC fiber chops wherein fiber bundles each consisting of a plurality of SiC inorganic fibers containing 50% or more SiC in their main component and having a length of 10 mm to 100 mm and a fiber diameter of 5 µm to 25 µm were bundled via an organic binder, and then kneading the resulting mixture with water to give the SiC fiber-dispersed plastic refractory composition, followed by drying and solidification thereof.

The silicon carbide fiber dispersion-reinforced composite refractory molding of the present invention consists of an aggregate part and a bonding part which are obtained by compounding an plastic refractory composition containing at least SiC, with SiC fiber chops, in an amount of 0.1 to 3% by weight based on the plastic refractory composition, wherein fiber bundles each consisting of a plurality of SiC inorganic fibers containing 50% or more SiC in their main component and having a length of 10 mm to 100 mm and a fiber diameter of 5 µm to 25 µm were bundled via an organic binder, kneading the resulting mixture with water and then drying and solidifying it. Monofilaments consisting of SiC inorganic fibers containing 50% or more SiC in their main component, having a fiber diameter of 5 µm to 25 µm, a fiver length of 50 µm to 2,000 µm and an aspect ratio of 5 to 200 are dispersed in the bonding part constituted by hydration reaction; specifically, monofilaments consisting of SiC inorganic fibers are dispersed separately and individually at random in the bonding part. Thus, the silicon carbide fiber dispersion reinforced composite refractory molding having significantly improved elastic-plastic fracture toughness, breaking energy and thermal shock resistance can be obtained by reinforcing its bonding part (matrix portion) with the monofilaments consisting of SiC inorganic fibers containing 50% or more SiC in their main component, having a fiber diameter of 5 µm to 25 µm, a fiver length of 50 µm to 2,000 µm and an aspect ratio of 5 to 200.

The silicon carbide fiber dispersion-reinforced composite refractory molding of the present invention is excellent in thermal shock resistance so that it can be placed directly in a high-temperature atmosphere without requiring a preheating step and can be used by direct dipping in a high-temperature molten metal, for example, in melt of zinc, aluminum, magnesium, copper or the like, without requiring a preheating step.

In the silicon carbide fiber dispersion-reinforced composite refractory molding of the present invention, the inorganic fibers dispersed in the bonding part constituted by hydration reaction are SiC inorganic fibers containing 50% or more SiC in their main component, having a fiber diameter of 5 µm to 25 µm, a fiver length of 50 µm to 2,000 µm and an aspect ratio (length/diameter) of 5 to 200, as described above. It is important in the present invention that the monofilaments consisting of SiC inorganic fibers be dispersed separately and individually in the bonding part.

As described above, it is desired that the proportion, in the plastic refractory composition containing at least SiC, of the SiC fiber chops wherein fiber bundles each consisting of a plurality of SiC inorganic fibers containing 50% or more SiC in their main component and having a length of 10 mm to 100 mm and a fiber diameter of 5 µm to 25 µm were bundled via an organic binder be 0.1 to 3% by weight based on the plastic refractory composition, that is, the SiC fiber chops be added and mixed in an amount of 0.1 to 3% by weight based on the plastic refractory composition containing at least SiC.

The reason why the SiC inorganic fibers are preferable herein is that they have high strength, high elastic modulus and excellent heat resistance, are excellent in reinforcement performance at high temperatures and do not cause hydration reaction with a binder.

Alumina fibers or alumina/silica fibers that are one type of inorganic fibers undergo hydration reaction with alumina cement as a binder so that the fibers adhere to the interface of the binder, thus allowing cracking without stopping at the interface of the fibers to propagate into the fibers, and thus their reinforcement effect cannot be obtained.

The reason why the SiC inorganic fibers containing 50% or more SiC in their main component, having a fiber diameter of 5 µm to 25 µm, a fiver length of 50 µm to 2,000 µm and an aspect ratio (length/diameter) of 5 to 200 should be dispersed separately and individually in the bonding part (matrix) of the silicon carbon fiber dispersion-reinforced composite refractory molding of the present invention is that if a plurality of the fibers in the form of a bundle are embedded as such in the matrix, alumina cement in the bonding part does not enter into the inside of the fiber bundle so that voids are generated in the fiber bundle and become defective to reduce the strength of the molding.

Accordingly, it is important that the shape of a kneader and kneading conditions (the amount of the plastic refractory composition, the amount of the SiC fiber chops added, the amount of water added, the kneading time, etc.) be regulated for kneading to produce the SiC fiber-dispersed plastic refractory composition wherein SiC fiber monofilaments having a predetermined length are dispersed separately and individually in the bonding part (matrix).

When the silicon carbon fiber dispersion-reinforced composite refractory molding of the present invention is produced, SiC fiber chops wherein fiber bundles each consisting of a plurality of SiC inorganic fibers containing 50% or more SiC in their main component and having a length of 10 mm to 100 mm and a fiber diameter of 5 µm to 25 µm were bundled via an organic binder (those chops constructed by bundling, with an organic binder, fiber bundles each consisting of a plurality of monofilaments) are mixed with an plastic refractory composition containing at least SiC and then kneaded with water. The SiC inorganic fibers are thereby broken by SiC particles in the plastic refractory composition, thereby being separated into individual monofilaments with reduced fiber length to be dispersed in the bonding part (matrix).

The reason why the SiC fiber monofilaments dispersed in the bonding part (matrix) desirably have a fiber diameter of 5 µm to 25 µm, a fiver length of 50 µm to 2,000 µm and an aspect ratio (length/diameter) of 5 to 200 is that the reinforcement effect of the fibers is theoretically proven to be attainable when the aspect ratio is 5 or more, and that as the fibers are shortened, the number of reinforcement sites is significantly increased thus increasing the reinforcement effect.

However, even if the aspect ratio exceeds 200, an increase in the reinforcement effect is not observed and imperfect dispersion is caused to inhibit the reinforcement effect in some cases, so it is desired that the aspect ratio (length/diameter) be in the range of 5 to 200.

When the SiC fiber chops used are "NICALON" (trade name) manufactured by Nippon Carbon Co., Ltd. (those chops wherein fiber bundles each consisting of 500 SiC inorganic fibers having the composition: SiC, 56 wt%; C, 32.0 wt%; and O, 12.0 wt%, and having a length of 20 mm and a fiber diameter of 14 µm were bundled via an organic binder (epoxy resin)), the 500 monofilaments having a fiber length of 20 mm are broken, by kneading, into many (50,000) monofilaments having a shorter length of 200 µm on average.

The SiC fiber chops wherein fiber bundles each consisting of a plurality of SiC inorganic fibers containing 60% or more SiC in their main component and having a length of 10 mm to 100 mm and a fiber diameter of 5 µm to 25 µm were bundled via an organic binder exhibit their reinforcement effect by compounding the plastic refractory composition containing at least SiC, with the chops in an amount of 0.1 wt% or more based on the plastic refractory composition. When the SiC fiber chops are added in an amount of 3 wt% or more, they are not completely dispersed during kneading and are left partially as fiber bundles or as fiber masses in the form of fiber balls to become defective to reduce the strength of the molding or to cause cracking by thermal strain.

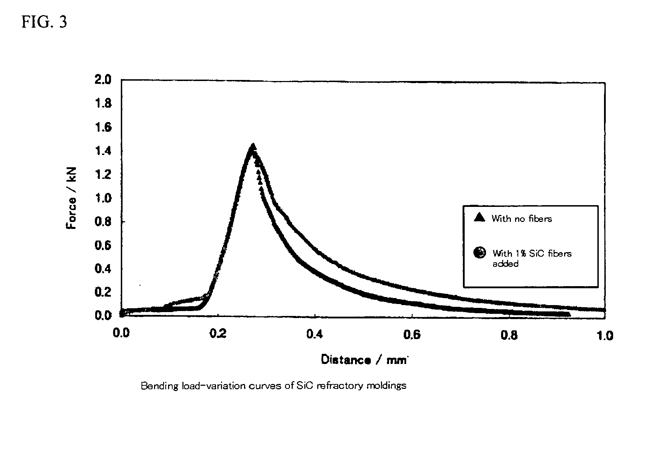

When the silicon carbon fiber dispersion-reinforced composite refractory moldings of the present invention produced in the procedures under condition 3 in Table 2 in Example 1 below, and conventional refractory moldings to which fibers were not added, were subjected for comparison to a bending test, the results shown in Table 1 and FIG. 3 are obtained. That is, the bending load-variation curve of the refractory molding of the present invention was evidently different from that of the conventional refractory molding with no fibers added. The silicon carbon fiber dispersion-reinforced composite refractory moldings of the present invention showed low unloading rates after the maximum load had been reached, as well as increased breaking energy, as compared with the conventional refractory moldings with no fibers added.

**Table 1**

| Fracture surface energy of SiC refractory (unit: N/m (J/m²)) | | | | | | |
|---|---|---|---|---|---|---|
| Sample No. | 1 | 2 | 3 | 4 | 5 | Average value |
| Products of the Invention | 172.2 | 173.6 | 158.3 | 150.0 | 147.7 | 160.4 |
| Conventional products (with no fibers added) | - | 87.5 | 115.3 | 126.4 | 128.2 | 114.4 |

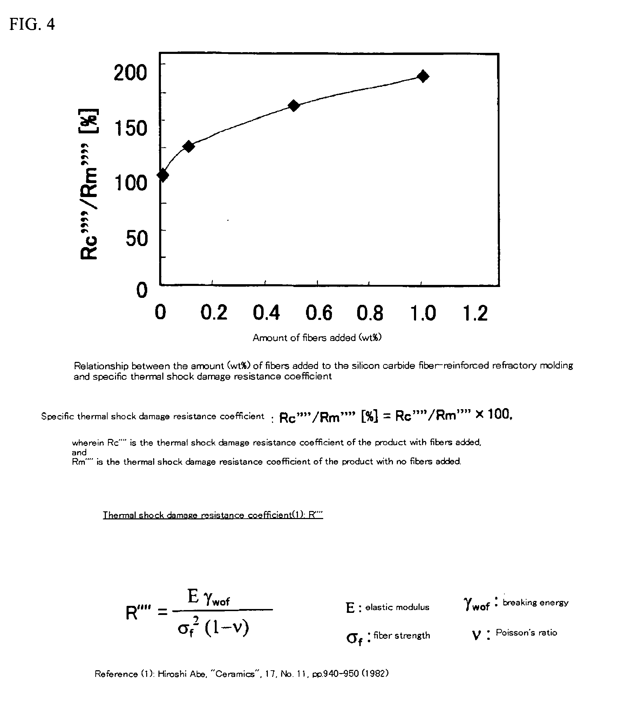

When the thermal shock damage resistance parameter was calculated, the parameter of the silicon carbon fiber dispersion-reinforced composite refractory molding of the present invention was significantly increased as compared with that of the conventional refractory molding with no fibers added (FIG. 4). That is, it was shown that according to the silicon carbon fiber dispersion-reinforced composite refractory molding of the present invention, cracking generated in the bonding part by thermal strain etc. is hardly developed (extended) as compared with the conventional product.

An U-shaped runner gutter and a pipe consisting of the silicon carbon fiber dispersion-reinforced composite refractory molding of the present invention produced in the procedures under condition 3 in Table 2 in Example 1 below, and an U-shaped runner gutter and a pipe consisting of conventional refractory molding to which fibers were not added, were prepared. These were dipped in an aluminum melt and compared. In the conventional refractory moldings with no fibers added, cracking was visually recognized, but in the products of the present invention, no cracking was recognized.

An ultrathin large flat plate consisting of the silicon carbon fiber dispersion-reinforced composite refractory molding of the present invention produced in the procedures under condition 3 in Table 2 in Example 1 below, and an ultrathin large flat plate consisting of conventional refractory moldings to which fibers were not added, were prepared. When these were subjected to drying heat treatment, cracking was visually recognized in the conventional refractory molding with no fibers added. On the other hand, no cracking was recognized in the product of the present invention.

When a melt bath (for aluminum-melting furnaces), a hot-water pump, a gutter and a pipes consisting of the silicon carbon fiber dispersion-reinforced composite refractory molding of the present invention produced in the procedures under condition 3 in Table 2 in Example 1 below were actually used, their lifetime was over 3 times as long as that of the conventional refractory molding with no fibers added.

Hereinafter, the present invention is described in more detail with reference to preferable examples, but the present invention is not limited to these examples and the embodiments illustrated above and can modified in various forms within the technical scope of the claims.

### Example 1

DRYSIC-85 (manufactured by AGC Ceramics Co., Ltd.) having the following composition was used as the plastic refractory composition containing at least SiC.

### (Composition of DRYSIC-85)

SiC: 83%
SiO₂: 6%
Al₂O₃: 9%
Fe₂O₃: 0.5%
Others: 1.5%

50 kg DRYSIC-85 was compounded with SiC fiber chops wherein fiber bundles each consisting of 500 SiC inorganic fibers containing 50% or more SiC in their main component and having a length of 20 mm and a fiber diameter of 14 µm had been bundled via an organic binder (epoxy resin), in an amount of 1% by weight based on DRYSIC-85.

The SiC fiber chops used herein are "NICALON" (trade name) manufactured by Nippon Carbon Co., Ltd. (those chops wherein fiber bundles each consisting of 500 SiC inorganic fibers consisting of the composition: SiC, 56 wt%; C, 32.0 wt%; and O, 12.0 wt% and having a length of 20 mm and a fiber diameter of 14 µm were bundled via an organic binder (epoxy resin)).

The resulting mixture, while being carefully observed, was stirred and kneaded with water added in an amount of 5% in a mixer under 3 conditions (kneading time, 2 minutes (condition 1); 4 minutes (condition 2); and 6 minutes (condition 3)) respectively to prepare SiC fiber-dispersed plastic refractory compositions. Each of the SiC fiber-dispersed plastic refractory compositions was sampled and examined for its fiber length and dispersion state under a microscope. The SiC fiber-dispersed plastic refractory composition was charged to a thickness of 1 cm into a frame of 130 cm in length and 1 m in width under vibration to mold a flat plate with the size of 1 cm (thickness)×130 cm×100 cm (thin-wall flat plate molding). Separately, a sample with the size of 43 mm×48 mm×305 mm was molded for property measurement. These moldings were those dried at 700°C for 4 hours in a drying furnace.

On the other hand, comparative products (products with no fibers added) were prepared in the following manner.

50 kg DRYSIC-85 was stirred and kneaded with water added in an amount of 5% in a mixer (kneading time, 6 minutes). After kneading, the material was charged to a thickness of 1 cm into a frame of 130 cm in length and 1 m in width under vibration to mold a flat plate with the size of 1 cm (thickness)×130 cm×100 cm (thin-wall flat plate molding). Separately, a sample with the size of 43 mm×48 mm×305 mm was molded for property measurement. These moldings were those dried at 700°C for 4 hours in a drying furnace.

The results are shown in Table 2 below (characteristic change, depending on the kneading condition, of the silicon carbon fiber dispersion-reinforced composite refractory moldings with 1 wt% SiC fibers added).

**Table 2**

| Characteristics, depending on the kneading condition, of the refractory moldings with SiC fibers added (products with 1 wt% SiC fibers added). | | | | | | |
|---|---|---|---|---|---|---|
| Kneading Conditions | Average Fiver Length (µm) (range) | Dispersed State of Fibers | Test Specimen | | | Appearance of Flat Plate Molding after Heat Treatment |
| | | | Molding Appearance | Bending Strength (MPa) | Breaking Energy (N/m) | |
| Condition 1 | 954 (50 to 20,000) | 20 mm fiber bundles remain | Foreign bodies (fiber bundles) are observed on the surface | 12.1 | 120 | Cracking in 1/5 |
| Condition 2 | 486 (50 to 1600) | Majority of fibers are monofilaments with plural fiber bundles occurring partially | Not unusual | 14.3 | 145 | 0/5 |
| Condition 3 | 292 (50 to 900) | All fibers are dispersed as monofilaments | Not unusual | 15.4 | 160 | 0/5 |
| Comparative Example: no fibers added | - | - | Not unusual | 17.6 | 114 | Cracking in 3/5 |

The fiber length and dispersion state in the SiC fiber-dispersed plastic refractory composition as the kneaded material are follows: under condition 1, the fibers were partially broken and made shorter, but a majority of the fibers remained fiber bundles of 20 mm in length; under condition 2, a majority of the fibers were dispersed into monofilaments broken to 1 mm or less in length, but a plurality of fiber bundles having 10 to 20 mm partially remained; and under condition 3, almost all the fibers were broken into those of 1 mm or less, and monofilaments were uniformly dispersed separately and individually. The average fiber length was 200 to 300 µm.

The appearances and characteristics of the moldings are that under condition 1, fiber bundles were observed on the surface of the molding with the naked eye, and the strength was low, but under condition 3, the appearance was not unusual, and the breaking energy was significantly increased as compared with that of the product with no fibers added.

As a result of observation of the appearances of the thin-wall flat plate moldings after heat treatment at 700°C, cracking was observed in 3 of 5 products with no fibers added, while under condition 1, cracking was observed in 1 of 5 products with fibers added. However, the products with fiber added were free of cracking under conditions 2 and 3.

It could be confirmed that the condition 3 is desirable as the condition for kneading fibers in production of the silicon carbon fiber dispersion-reinforced composite refractory molding of the present invention.

Then, 50 kg DRYSIC-85 was compounded with the above-mentioned "NICALON" (trade name) manufactured by Nippon Carbon Co., Ltd., in amounts of 0.1 wt%, 0.5 wt%, 1 wt%, 2 wt% and 3 wt%, respectively, and then stirred and kneaded with water added in an amount of 5% in a mixer (kneading time, 6 minutes) under careful observation. Each of the kneaded materials, that is, the SiC fiber-dispersed plastic refractory composition was charged to a thickness of 1 cm into a frame of 70 cm in length and 1 m in width under vibration to mold a flat plate with the size of 1 cm (thickness)×70 cm×100 cm (thin-wall flat plate molding). Separately, a sample with the size of 43 mm×48 mm×305 mm was molded for property measurement. These moldings were those dried at 700°C for 4 hours in a drying furnace.

The results (characteristics, depending on the amount of fibers added, of the refractory moldings with SiC fibers added) are shown in Table 3.

**Table 3**

| Characteristics, depending on the amount of fibers added, of the refractory moldings with SiC fibers added | | | | | | |
|---|---|---|---|---|---|---|
| Amount of Fibers Added (wt%) | Dispersed State of Fibers | Molding Appearance | Bending Strength (MPa) | Breaking Energy (N/m) | Coefficient of Thermal Shock Damage Resistance (R"") | Appearance of Flat Plate Molding after Heat Treatment |
| 0 | - | Not unusual | 17.6 | 114 | 12.3 | Cracking in 3/5 |
| 0.1 | Monofilaments are uniformly dispersed | Not unusual | 13.9 | 120 | 14.9 | 0/5 |
| 0.5 | The same as above | Not unusual | 12.7 | 140 | 19.3 | 0/5 |
| 1.0 | The same asabove | Not unusual | 15.4 | 160 | 22.6 | 0/5 |
| 2.0 | The same as above | Not unusual | 17.8 | 170 | 20.9 | 0/5 |
| 3.0 | Fiber bundles are partially observed | Fiber bundles are observed on the surface | 11.3 | 150 | 30.0 | 0/5 |

The dispersed state of fibers in the SiC fiber-dispersed plastic refractory composition as the kneaded material is that 200 to 300 µm monofilaments were uniformly dispersed in the compositions with fibers added in amounts of 0.1%, 0.5%, 1.0% and 2% respectively, while long fiber bundles remained partially in the composition with fibers added in an amount of 3%.

As to the characteristics of the moldings, the breaking energy and the coefficient of thermal shock damage resistance increased as the amount of fibers added increased, and the breaking energy and the coefficient of thermal shock damage resistance significantly increased to 40% and 84% respectively in the product with fibers added in an amount of 1%, as compared with those of the product with no fibers added. This result indicates that this material is a material whose cracking is hardly developed, that is, one which is hardly broken even by heat strain etc.

However, as the amount of fibers added increased to 3%, all fibers were hardly dispersed, and thus fiber bundle masses were observed on the surface of the molding and became defective to reduce the strength of the molding.

As a result of observation of the appearances of the thin-wall flat plate moldings after heat treatment at 700°C, cracking was observed in 3 of 5 products with no fibers added, whereas cracking was not observed in any products with fibers added.

This result indicates that the silicon carbon fiber dispersion-reinforced composite refractory molding of the present invention is highly resistant to damage by thermal strain and is excellent in thermal damage resistance.

### Comparative Example 1

In place of the plastic refractory composition containing at least SiC, ASAL-85Z (manufactured by AGC Ceramics Co., Ltd.) having the following composition was used.

### (Composition of ASAL-85Z)

SiC: 0%
SiO₂: 11%
Al₂O₃: 83%
Fe₂O₃: 0%
Others: 6.0%

50 kg ASAL-85Z was stirred and kneaded with water added in an amount of 5% in a mixer (kneading time, 6 minutes). After kneading, this material was charged to a thickness of 1 cm into a frame of 130 cm in length and 1 m in width under vibration to mold a flat plate with the size of 1 cm (thickness)×130 cm×100 cm (thin-wall flat plate molding). Separately, a sample with the size of 43 mm×48 mm×305 mm was molded for property measurement. These moldings were those dried at 700°C for 4 hours in a drying furnace.

Then, 50 kg ASAL-85Z was compounded with the above-mentioned "NICALON" (trade name, manufactured by Nippon Carbon Co., Ltd.) in an amount of 1% by weight based on ASAL-85Z.

The mixture, while being carefully observed, was stirred and kneaded with water added in an amount of 5% in a mixer under 3 conditions (kneading time, 2 minutes (condition 1); 4 minutes (condition 2); and 6 minutes (condition 3)) respectively. Each of the resulting kneaded materials was sampled and examined for its fiber length and dispersion state under a microscope. The kneaded material was charged to a thickness of 1 cm into a frame of 130 cm in length and 1 m in width under vibration to mold a flat plate with the size of 1 cm (thickness)×130 cm×100 cm (thin-wall flat plate molding). Separately, a sample with the size of 43 mm×48 mm×305 mm was molded for property measurement. These moldings were those dried at 700°C for 4 hours in a drying furnace.

The results are shown in Table 4. For comparison, data on the product produced under condition 3 in Table 2 in Example 1 are also shown.

**Table 4**

| Characteristics of the refractory moldings with fibers added wherein an SiC-free plastic refractory composition was used | | | | | | |
|---|---|---|---|---|---|---|
| (Products with 1 wt% SiC fibers added) | | | | | | |
| Amount of Fibers Added/Castable Material | Average Fiver Length (µm) (range) | Dispersed State of Fibers | Test Specimen | | | Appearance of Flat Plate Molding after Heat Treatment |
| | | | Molding Appearance | Bending Strength (MPa) | Breaking Energy (N/m) | |
| 1%/ ASAL-85Z | 7,000 (50 to 20,000) | 10 to 20 mm fiber bundles and fiber balls remain in considerable amounts | Foreign bodies (fiber bundles, fiber balls) are observed on the surface | 12.1 | 120 | Cracking in 1/5 |
| 1%/DRYSIC-85 (condition 3 in Table 2 in Example 1) | 292 (50 to 900) | All fibers are dispersed as monofilaments | Not unusual | 15.4 | 160 | 0/5 |
| ASAL-85Z with no fibers added | - | - | Not unusual | 18.5 | 105 | Cracking in 3/5 |

The length of fibers in the kneaded materials was not shorter than in the material of the present invention (under condition 3 in Example 1) using the plastic refractory composition containing at least SiC, and a majority of the fibers remained in the form of fiber bundles of 10 to 20 mm in length and were poor in dispersion into monofilaments.

On the surfaces of the moldings, fiber bundles were observed with the naked eye, and both strength and breaking energy were low.

As a result of observation of the appearances of the thin-wall flat plate moldings after heat treatment at 700°C, cracking was observed in 3 of 5 products with no fibers added, and cracking was observed in 1 of 5 products with fibers added.

### Example 2

As the plastic refractory composition containing at least SiC, DRYSIC-85 manufactured by AGC Ceramics Co., Ltd. was used similarly to Example 1.

"NICALON NL201" (trade name, manufactured by Nippon Carbon Co., Ltd.) having a chemical composition in Table 5 and general characteristics in Table 6, that is, those chops wherein fiber bundles each consisting of 500 SiC inorganic fibers having a length of 20 mm and a fiber diameter of 14 µm were bundled via an organic binder (epoxy resin), were used as the "SiC fiber chops wherein fiber bundles each consisting of 500 SiC inorganic fibers containing 60% or more SiC in their main component and having a length of 20 mm and a fiber diameter of 14 µm were bundled via an organic binder (epoxy resin)".

Alumina fiber chops were also used in place of the "SiC fiber chops wherein fiber bundles each consisting of 500 SiC inorganic fibers containing 60% or more SiC in their main component and having a length of 20 mm and a fiber diameter of 14 µm were bundled via an organic binder (epoxy resin)". The alumina fiber chops used were "Altex" (manufactured by Sumitomo Chemical Co., Ltd.), that is, those chops wherein fiber bundles each consisting of 500 alumina inorganic fibers having a length of 20 mm and a fiber diameter of 10 µm were bundled via an organic binder (PVA)) or "Nextel 312" (manufactured by 3M, US), that is, those chops wherein fiber bundles each consisting of 500 alumina inorganic fibers having a length of 20 mm and a fiber diameter of 11 µm were bundled via an organic binder (PVA)), each having a chemical composition in Table 5 and general characteristics in Table 6.

**Table 5**

| Chemical Composition (wt%) | | | | | |
|---|---|---|---|---|---|
| Fiber Name | Al₂O₃ (%) | SiO₂ (%) | B₂O₃ (%) | SiC (%) | C (%) |
| Altex | 85 | 15 | - | - | - |
| Nextel312 | 62 | 24 | 14 | - | - |
| NICALON NL201 | - | 20 | - | 68 | 12 |

**Table 6**

| General Characteristics of Fibers | | | | | |
|---|---|---|---|---|---|
| Fiber Name | Density (g/cm³) | Fiber Diameter (µm) | Tensile Strength (GPa) | Elastic Modulus (GPa) | Coefficient of Thermal Expansion (ppm/°C) |
| Altex | 3.3 | 10 | 1.8 | 210 | 6 |
| Nextel312 | 2.7 | 10-12 | 1.7 | 150 | 3.0 |
| NICALON NL201 | 2.5 | 14 | 3.0 | 200 | 3.5 |

50 kg DRYSIC-85 was compounded with NICALON NL201 (trade name), Altex (trade name) or Nextel 312 (trade name) in an amount of 1% by weight based on DRYSIC-85.

Then, the resulting mixtures, while being carefully observed, were stirred and kneaded with water added in an amount of 5% in a mixer under condition 3 (kneading time, 6 minutes) in Table 2 in Example 1 to produce kneaded materials. Each of the kneaded materials was sampled and examined for its fiber length and dispersion state under a microscope. Each kneaded material was charged to a thickness of 1 cm into a frame of 130 cm in length and 1 m in width under vibration to mold a flat plate with the size of 1 cm (thickness)×130 cm×100 cm (thin-wall flat plate molding). Separately, a sample with the size of 43 mm×48 mm×305 mm was molded for property measurement. These moldings were those dried at 700°C for 4 hours in a drying furnace.

The results (characteristics of the refractory moldings depending on the type of fibers added) are shown in Table 7.

**Table 7**

| Comparison of characteristics, depending on the type of fibers added, of the refractory moldings with fibers added | | | | | | |
|---|---|---|---|---|---|---|
| (Plastic refractory composition: DRYSIC-85, the amount of fibers added: 1 wt%) | | | | | | |
| Added Fibers | Average Fiver Length (µm) (range) | Dispersed State of Fibers | Test Specimen | | | Appearance of Flat Plate Molding after Heat Treatment |
| | | | Molding Appearance | Bending Strength (MPa) | Breaking Energy (N/m) | |
| Altex | 380 (50 to 1200) | Almost all fibers are dispersed as monofilaments | Not unusual | 14.5 | 120 | Cracking in 2/5 |
| Nextel 312 | 550 (50 to 5,000) | Long fiber bundles partially remain | Foreign bodies (fiber bundles, fiber balls) are partially observed on the surface | 13.2 | 110 | Cracking in 2/5 |
| NICALON NL201 | 292 (50 to 900) | All fibers are dispersed as monofilaments | Not unusual | 15.4 | 160 | 0/5 |
| With no fibers added | - | - | Not unusual | 18.5 | 105 | Cracking in 3/5 |

The dispersed state of the alumina fibers in the kneaded material was inferior to that of NICALON, and particularly in Nextel (trade name), long fiber bundles partially remained. The strength and breaking energy of the moldings with the alumina fiber added were lower than that of the product with NICALON added, and their flat plate moldings cracked after heat treatment.

When their fracture cross-section was observed, it was a flat fracture cross-section with no fibers removed. This is considered attributable to the fact that the alumina fibers adhered to the matrix by hydration with a cement component of the castable, thus reducing the breaking energy and failing to attain the effect of the fibers added.

### Example 3

An integrally molded retention furnace, a melt-feeding device, a panel heater for keeping the temperature of melt, a ladle for delivery of melt and a continuous casting dispenser, each of which was composed of the silicon carbon fiber dispersion-reinforced composite refractory molding of the present invention according to the production procedures under condition 3 in Table 2 in Table 1, were prepared. For comparison, an integrally molded retention furnace, a melt-feeding device, a panel heater for keeping the temperature of melt, a ladle for delivery of melt and a continuous casting dispenser, each of which was similar to the one prepared above, were prepared respectively as the conventional refractory moldings with no fibers added.

The sizes of these products are as follows. The continuous casting dispenser was used for copper melt, and the other products were used for aluminum melt.

Integrally molded retention furnace: thickness 1 mxlength 1.5 mm×width 2.5 m
Melt-feeding device: thickness 1.5 m×length 0.5 mm×width 0.5 m
Panel heater for keeping the temperature of melt: thickness 0.7 m×length 0.7 mmxwidth 0.1 m
Ladle for delivery of melt: diameter 1.2 m×height 1.0 mm
Continuous casting dispenser: thickness 0.7 m×length 1.0 mm×width 1.0 m

The conventional refractory moldings with no fibers added became unusable after use for 2 days to half year or after about 1 year at longest, and the products other than the integrally molded retention furnace could not be practically used. On the other hand, any products of the present invention could be practically used and were usable for a longer time than that of the conventional products.

According to the present invention, various large integrally molded products, which have conventionally not been practically usable, could be formed and were found to have significantly improved durability.

## Claims

1. A silicon carbide fiber dispersion-reinforced composite refractory molding, comprising an aggregate part and a bonding part which are obtained by:
compounding an plastic refractory composition containing at least SiC, with SiC fiber chops, in an amount of 0.1 to 3% by weight based on the plastic refractory composition, wherein fiber bundles each consisting of a plurality of SiC inorganic fibers containing 50% or more SiC in their main component and having a length of 10 mm to 100 mm and a fiber diameter of 5 µm to 25 µm were bundled via an organic binder,
kneading the resulting mixture with water and then drying and solidifying it, wherein:
the aggregate part contains at least SiC,
the bonding part is constructed by hydration reaction, and
monofilaments consisting of SiC inorganic fibers containing 50% or more SiC in their main component, having a fiber diameter of 5 µm to 25 µm, a fiver length of 50 µm to 2,000 µm and an aspect ratio of 5 to 200 are dispersed in the bonding part.
